Europäisches Patentamt

(19) European Patent Office

Office européen des brevets

(11) Publication number: **0 457 630 A2**

(12)

# EUROPEAN PATENT APPLICATION

(21) Application number: **91400866.9**

(22) Date of filing: **29.03.91**

(51) Int. Cl.⁵: **C08G 18/08, C08G 18/10, C08G 18/32, C08K 5/42, C09J 175/02, B60J 1/00**

(30) Priority: **03.04.90 GB 9007501**

(43) Date of publication of application:
**21.11.91 Bulletin 91/47**

(84) Designated Contracting States:
**AT BE CH DE ES FR GB IT LI NL SE**

(71) Applicant: **BOSTIK LIMITED**
**Ulverscroft Works Ulverscroft Road**
**Leicester LE4 6BW (GB)**
**GB**
Applicant: **Bostik GmbH**
**Gattenhöferweg 36**
**W-6370 Oberursel (DE)**
**BE CH DE IT LI NL AT**
Applicant: **BOSTIK FRANCE SA**
**RN 19**
**F-77170 Coubert (FR)**
**ES FR**
Applicant: **BOSTIK AB**
**Strandbadsvaegen**
**S-25229 Helsingborg (SE)**
**SE**

(72) Inventor: **Piestert, Gerhard**
**Ahornweg 11**
**W-6870 Schwetzingen (DE)**

(74) Representative: **Dubost, Thierry Pierre**
**Cray Valley SA, BP 22**
**F-60550 Verneuil en Halatte (FR)**

(54) **Two-component polyurethane composition and method of mixing thereof.**

(57) A pasty, two-component polyurethane composition comprising a basic Part A and a reaction Part B is mixed with a significant volume excess of Part A using a static mixer provided with 15% to 75% of the number of elements calculated for homogeneous mixing of such a composition using equal volumetric proportions. The invention provides a two-component polyurethane composition and a method of mixing such a composition.

EP 0 457 630 A2

The present invention relates to a pasty, two-component adhesive or sealant composition based on polyurethanes, consisting of a basic Part A and a reaction Part B, and a method of mixing these two Parts.

Numerous two-component adhesives or sealants are known. These materials consisting of two Parts A and B are mixed homogeneously immediately before application. It is also known to use static mixers, for example Kenics-mixers, for this mixing procedure. Such mixers consist of several elements called "mixing elements" or "mixing stages", the number of which depends upon the nature of the components to be mixed.

In the case where the two Parts of the adhesive or sealants are low viscous liquids, there is a turbulent flow in the mixer and for a homogeneous mixture only a low number of mixing elements is required for homogeneous mixing. For example, in the case of a Kenics-mixer, this is normally six. This also means that no high pressure is necessary to pass the two Parts of the adhesive or sealant through the mixer.

However, if the two Parts of the adhesive or sealant are of pasty consistency, the situation is completely different. There is laminar flow in the mixer and a considerably higher number of mixing elements is necessary in order to achieve a homogeneous mixture. Because of the high number of mixing elements and the high viscosity of the pasty components, a high pressure is required. Therefore efficient pumps are required or, in the case of manually operated tools, an external trigger system has to be used, resulting in poor output rates.

It is an object of the present invention to provide a pasty two component adhesive or sealant composition and a method of mixing the two parts which is efficient with reduced pressure.

It is a further object of the present invention to provide a pasty two component adhesive or sealant composition and a method of mixing the two Parts which, when used in connection with usual commercially available manually operated application gun, provides acceptable output rates.

According to the present invention we provide a pasty, two-component adhesive or sealant polyurethane composition comprising a basic Part A comprising a pre-polymer with terminal isocyanate groups together with at least one latent curing agent which is mixed with a reaction Part B comprising water or a water-containing composition characterised in that Part A is used in an excess of at least 100% by volume.

The mixing (volume) ratio of Part A to Part B is in the range 100:50 to 100:1, preferably in the range 100:20 to 100:10.

In accordance with well-known practice Part A and/or Part B may contain an additive to adjust the viscosity of the composition and, again as in common practice, the composition may include additives such as plasticisers, solvents, fillers, pigments, dyes, stabilisers and catalysts.

The latent curing agent is released by water from Part B when Parts A and B are mixed. Preferred latent curing agents suitable for use with the present invention are enamines, oxazolidines and ketimines. Preferably Part A is filled with a molecular sieve free from adsorbed water and loaded with a primary or secondary amine with two or more functionalities.

Further according to the present invention, we provide a method of mixing a pasty, two-component adhesive or sealant polyurethane composition comprising mixing a basic Part A comprising a pre-polymer with terminal isocyanate groups together with at least one latent curing agent with a reaction Part B comprising water or a water-containing composition characterised in that Part A is used in an excess of at least 100% by volume and by use of a multi-element static mixer having only 15% to 75% of the number of elements required for the homogeneous mixing of a pasty, two-part polyurethane composition using equal volumetric proportions.

Part A and Part B may be mixed in a volume ratio in the range 100:50 to 100:1, preferably in the range 100:20 to 100:10.

Several types of static mixers are commercially available, which can be used, in a modified form, to provide adhesive or sealant compositions in accordance with the present invention.

In one preferred embodiment of the invention, a Kenics-mixer is used consisting of mixing elements each of which divides the compositions to be mixed into two separate streams under 90° rotation to the left or to the right. This process results in a layered structure of the two parts. After passing each element the thickness of the layers is halved and the number is doubled. To achieve homogeneous mixing of two pasty parts with this type of mixer at least 24 mixing elements are necessary. According to the present invention, a Kenics-mixer need have only 4 to 18 mixing elements (i.e. 17 to 75 percent of the theoretical number required for homogeneous mixing), preferably 8 to 12, mixing elements (i.e. 42 to 50 percent of the theoretical number) is used.

The principle of another static mixer used in a preferred embodiment of the invention, the so called "package-mixer", is based on open flow channels crossing each other. Such a package mixer, commercially available for example from TAH Industries Inc. (New Jersey, USA) needs for homogeneous mixing of pasty parts 28 mixing stages. The mixer of this type used according to the present invention needs only 4 to 21 (i.e. 15 to 75 percent of the theoretical number) preferably 11 to 14 mixing stages (i.e. 40 to 50 percent of the theoretical number).

A special advantage of the adhesive or sealant compositions produced according to the present invention is that if the dimensions of the mixer are suitably adjusted, it enables the application of the pasty two components adhesive or sealant to be effected with acceptable output rates by means of a manually operated gun.

2

In an especially preferred embodiment of the invention, the static mixer used has a diameter of 5 to 30 mm, preferably 10 to 20 mm. This enables the pasty two component adhesive or sealant composition to be applied by means of a simple tool, for example a commercial double cartridge hand gun.

The adhesive or sealant compositions according to the present invention are especially advantageous and designed for gluing windscreens of cars and automotives, and more particularly those cars with directly glazed windows. Therefore according to the present invention we provide a method for gluing a car windscreen by applying a pasty, two-component adhesive or sealant polyurethane composition comprising a basic Part A comprising a pre-polymer with terminal isocyanate groups together with at least one latent curing agent which is mixed with a reaction Part B comprising water or a water-containing composition, characterised in that Part A is used in an excess of at least 100% by volume. In further detail, the polyurethane composition used in the said method will be as described hereinabove.

In order that the invention may be better understood, an especially preferred embodiment will now be described in greater detail by way of example.

EXAMPLE

The example describes a polyurethane adhesive composition comprising a polyurethane composition comprising amine loaded molecular sieve as basic Part A.

a) Preparation of Part A

32.85 parts by weight alkyl suphonic acid ester of phenol -MESAMOL (RTM-Bayer)-, 19.00 parts by weight polyether triol of polypropylene oxide -DESMOPHEN (RTM) 1910U (Bayer)-, 13.90 parts by weight polyether diol of polypropylene oxide - DESMOPHEN (RTM) 1900U (Bayer)-, 0.10 parts by weight p-toluol sulphonamide, 6.82 parts by weight MDI -DESMODUR (RTM)-44MS (Bayer)- and 19.00 by weight carbon black -ELFTEX (RTM) 465 (Cabot)- were dispersed homogeneously under heating and after addition of 0.05 parts by weight DBTL, the mixture being kept at 80°C for 1 hour. Into the hot mixture 8.40 parts by weight of a suspension of ethylene-diamine-loaded molecular sieve, prepared as in b) below, was added and stirred until homogeneous.

The resulting pasty mixture was filled (under exclusion of air) into cartridges.

b) Preparation of the molecular sieve suspension :

In 4.20 parts by weight alkyl sulphonic acid ester of phenols -MESAMOL (RTM-Bayer)- were dispersed in 3.79 parts by weight molecular sieve powder 4 A, 0.42 parts by weight ethylene diamine added, and the mixture moved on a roller bank for 48 hours.

c) Preparation of Part B :

In 15.00 parts by weight water were dispersed 3.00 parts by weight finely divided silica -AEROSIL (RTM) 200 (Degussa)-, the resulting pasty mixture again dispersed in 70.00 parts by weight alkyl sulphonic acid ester of phenol -MESAMOL (RTM-Bayer)- and the mixture adjusted to a pasty consistency by adding 15.00 parts by weight of carbon black.

The resulting pasty mixture was filled in cartridges.

d) Application of the adhesive using a Kenics-mixer :

Two cartridges containing Part A and Part B (length of the cartridges 150 mm, diameter 46 mm (Part A) and 17.2 mm (Part B), volume ratio A : B = 100 : 14) were connected through an adapter to a Kenics-mixer (diameter 13 mm) having 12 mixing elements.

The two cartridges, connected with the mixer were introduced into a double cartridge hand gun (model "HILTI P2000") and the adhesive applied into primered steel test specimens (primer : BOSTIK (RTM) clear primer-, bonded area: 25 x 10 mm, adhesive thickness 2 mm).

The following build up of tensile shear strength was measured :

| curing time | tensile shear strength |
|---|---|
| 60 min | $0.5$ $N/mm^2$ |
| 120 min | $3.2$ $N/mm^2$ |
| 240 min | $4.1$ $N/mm^2$ |
| 24 h | $4.3$ $N/mm^2$ |

The adhesive cured without blister formation and without visible inhomogeneities.
Output rate with the hand gun : 500 ml/min.

e) Application of the adhesive using a package-mixer :

The same adhesive was applied in the same way as described under d), but using a package-mixer (TAH Industries Nr. 020-064, diameter 18.75 mm) having 14 mixing stages was connected to the two cartridges instead of the Kenics-mixer. The following build up of tensile shear strength was measured in this case :

| curing time | tensile shear strength |
|---|---|
| 60 min | $0.25$ $N/mm^2$ |
| 120 min | $2.75$ $N/mm^2$ |
| 240 min | $3.80$ $N/mm^2$ |
| 24 h | $4.00$ $N/mm^2$ |

Claims

1 - A pasty, two-component adhesive or sealant polyurethane composition comprising a basic Part A comprising pre-polymer with terminal isocyanate groups together with at least one latent curing agent which is mixed with a reaction Part B comprising water or a water-containing composition characterised in that Part A is used in an excess of at least 100% by volume.

2 - A pasty, two component polyurethane composition according to claim 1 wherein the mixing (volume) range of Part A to Part B is in the range 100:50 to 100:1, preferably in the range 100:20 to 100:10.

3 - A pasty, two-component polyurethane composition according to claim 1 or 2 wherein Part A is filled with a molecular sieve free from adsorbed water and loaded with a primary or secondary amine with two or more functionalities.

4 - A method of mixing a pasty, two-component adhesive or sealant polyurethane composition comprising mixing a basic Part A comprising a pre-polymer with terminal isocyanate groups together with at least one latent curing agent with a reaction Part B comprising water or a water-containing composition characterised in that Part A is used in an excess of at least 100% by volume and by use of a multi-element static mixer having only 15% to 75% of the number of elements required for the homogeneous mixing of a pasty, two-part polyurethane composition using equal volumetric proportions.

5 - A method of mixing a pasty, two-component polyurethane composition according to claim 4 wherein the mixing (volume) ratio of Part A to Part B is in the range 100 : 50 to 100 : 1, preferably in the range 100 : 20 to 100 : 1.

6 - A method of mixing a pasty, two-component polyurethane composition according to claim 4 or 5 wherein the multi-element static mixer has only 40% to 50% of the number of elements required for the homogeneous mixing of a pasty, two-part polyurethane composition using equal volumetric proportions.

7 - A method of mixing a pasty, two-component composition according to claim 4, 5 or 6 wherein the static mixer has a diameter of 5-30 mm, preferably 10-20 mm.

4

**8** - A method of mixing a pasty, two-component polyurethane composition according to any one of claims 4, 5, 6 or 7 wherein the static mixer is of Kenics type having 4 to 18, preferably 8 to 12, mixing elements in place of the minimum of 24 mixing elements found necessary for homogeneous mixing of a pasty, two-part polyurethane composition using equal volumetric proportions.

**9** - A method of mixing a pasty, two component polyurethane composition according to any one of claims 4, 5, 6 or 7 wherein the static mixer is a "package mixer" having 4 to 21, preferably 11 to 14, mixing elements in place of the minimum of 28 mixing elements found necessary for homogeneous mixing of a pasty, two-part polyurethane composition using equal volumetric proportions.

**10** - A method for gluing a car windscreen by applying a pasty, two-component adhesive or sealant polyurethane composition comprising a basic Part A comprising a pre-polymer with terminal isocyanate groups together with at least one latent curing agent which is mixed with a reaction Part B comprising water or a water-containing composition, characterised in that Part A is used in an excess of at least 100% by volume.